# EUROPEAN PATENT SPECIFICATION

(11) **EP 3 577 488 B1**
(45) Date of publication and mention of the grant of the patent: **15.11.2023**
(21) Application number: 18768656.3
(22) Date of filing: 02.03.2018
(51) Int. Cl.: G01S 7/481, G01S 17/08, G02B 26/10

(54) **METHOD FOR DETECTING OBJECT AND ELECTRONIC DEVICE THEREOF**
VERFAHREN ZUR ERKENNUNG EINES OBJEKTS UND ELEKTRONISCHE VORRICHTUNG DAMIT
PROCÉDÉ DE DÉTECTION D'OBJET ET DISPOSITIF ÉLECTRONIQUE ASSOCIÉ

(30) Priority: 15.03.2017 RU 2017108632; 07.02.2018 KR 20180015043
(43) Date of publication of application: 11.12.2019
(73) Proprietor: Samsung Electronics Co., Ltd., Suwon-si, Gyeonggi-do 16677 (KR)
(72) Inventor: POLONSKY, Stanislav Vladimirovich, Moscow 117292 (RU); NIKISHOV, Artem Yurievich, Kolomna Moscow Region 140404 (RU)
(74) Representative: Nederlandsch Octrooibureau
(86) International application number: PCT/KR2018/002550
(87) International publication number: WO 2018/169234

(56) References cited:
- US-A1- 2002 143 252
- US-A1- 2002 181 839
- US-A1- 2010 053 715
- US-A1- 2010 053 715
- US-A1- 2013 241 762
- US-A1- 2016 291 134
- US-B1- 8 203 702
- US-B1- 9 063 549
- US-B1- 9 063 549

## Description

### Technical Field

The present disclosure relates to a method for detecting an object, and an electronic device thereof.

### Background Art

Light detection and ranging (LiDAR) is a remote sensing technology that measures a distance by illuminating a target with a laser light and analyzing the reflected light. For example, for navigation of autonomous ground vehicles, the LiDAR is one of the main instrument to detect obstacles, collect 3-dimension (3D) mobile data, and generate a 3D map. However, a typical scanning device using the LiDAR technology has shortcomings such as a large size, a manual adjustment of a rotating device, a high complexity due to a large number of light sources and receivers.

The above information is presented as background information only to assist with an understanding of the present disclosure. No determination has been made, and no assertion is made, as to whether any of the above might be applicable as prior art with regard to the present disclosure.

US 2002/0143252 A1 discloses an ultrasonic scanning device which can make a volumetric scan of a conical scanning field.

US 9,063,549 B1 discloses a light detection and ranging (LIDAR) device that scans through a scanning zone while emitting light pulses and receives reflected signals corresponding to the light pulses. The LIDAR device scans the scanning zone by directing light toward a rotating mirror to direct the light pulses through the scanning zone.

### Disclosure of Invention

### Solution to Problem

Aspects of the present disclosure are to address at least the above-mentioned problems and/or disadvantages and to provide at least the advantages described below.

In accordance with an aspect of the present invention, an electronic device according to claim 1 is provided.

In accordance with another aspect of the present invention, a method of operating an electronic device according to claim 12 is provided.

### Brief Description of Drawings

The above and other aspects, features, and advantages of certain embodiments of the present disclosure will be more apparent from the following description taken in conjunction with the accompanying drawings, in which:
FIG. 1 illustrates an example of an environment in which an electronic device operates according to an embodiment of the present disclosure;
FIG. 2 illustrates a structure of an electronic device according to an embodiment of the present disclosure;
FIG. 3 is a flowchart illustrating an electronic device according to an embodiment of the present disclosure;
FIG. 4 is another flowchart illustrating an electronic device according to an embodiment of the present disclosure;
FIG. 5A illustrates a structure of an electronic device for controlling a reflector by using a magnetic force according to an embodiment of the present disclosure;
FIG. 5B illustrates a reflector and a beam deflection device in an electronic device according to an embodiment of the present disclosure;
FIG. 6 is a cross-sectional view illustrating a suspension according to an embodiment of the present disclosure;
FIG. 7A is a graph illustrating supplied current of a vertical (V)-control coil over time according to an embodiment of the present disclosure;
FIG. 7B is a graph illustrating supplied current of a V-control coil depending on a typical period according to an embodiment of the present disclosure;
FIG. 8 is a plan view illustrating a stabilization environment in a horizontal direction according to an embodiment of the present disclosure;
FIG. 9A illustrates a scanning operation of a horizontal plane in an electronic device based on a maglev reflector according to an embodiment of the present disclosure;
FIG. 9B illustrates a scanning operation of a vertical plane in an electronic device based on a maglev reflector according to an embodiment of the present disclosure;
FIG. 10 is a flowchart illustrating a fully adaptive control for an electronic device according to an embodiment of the present disclosure;
FIG. 11 is a flowchart illustrating a coordination of a plurality of scanning devices disposed to an apparatus according to an embodiment of the present disclosure;
FIG. 12 illustrates the concept of light detection and ranging (LiDAR) for atmospheric measurement according to an embodiment of the present disclosure;
FIG. 13 is a flowchart illustrating an atmospheric measurement service based on LiDAR according to an embodiment of the present disclosure;
FIGS. 14A and 14B illustrate examples of detecting an object on a car according to various embodiments of the present disclosure;
FIG. 15A illustrates an example of a service robot controlled by a navigation based on a 3-dimension (3D) scanning map according to an embodiment of the present disclosure; and
FIG. 15B illustrates an example of a 3D scanning map according to an embodiment of the present disclosure.

Throughout the drawings, it should be noted that like reference numbers are used to depict the same or similar elements, features, and structures.

### Best Mode for Carrying out the Invention

The following description with reference to the accompanying drawings is provided to assist in a comprehensive understanding of various embodiments of the present disclosure. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

A hardware-based access method is described for example in the various embodiments of the present disclosure described hereinafter. However, since the various embodiments of the present disclosure include a technique in which hardware and software are both used, a software-based access method is not excluded in the various embodiments of the present disclosure.

Hereinafter, the present disclosure relates to a method for detecting an object and an electronic device thereof. Specifically, the present disclosure describes a technique for detecting an object by using a light controlled by the use of a reflector.

A term indicating a signal, a term indicating a constitutional element of a device, or the like used in the following description is for purposes only. Therefore, the present disclosure is not limited to terms described below, and thus other terms having the same technical meaning may also be used.

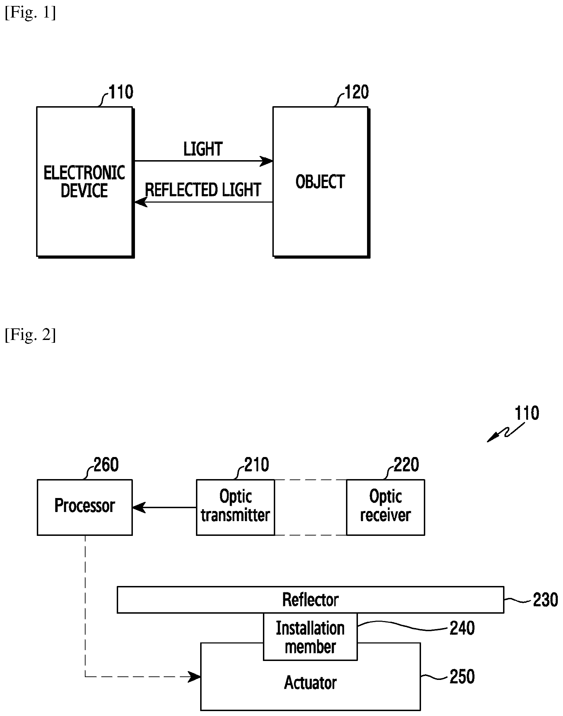

FIG. 1 illustrates an example of an environment in which an electronic device operates according to an embodiment of the present disclosure.

Referring to FIG. 1, an electronic device 110 emits a light in at least one direction, and receives a light reflected from an object 120. In addition, the electronic device 110 may determine a distance to the object 120, a shape, or the like based on the reflected light. For example, the electronic device 110 may detect the object 120 by using a time of emitting the light and a time of receiving the reflected light. Herein, the light may be referred to as a 'ray', a 'light beam', a 'beam', or other terms having the same technical meanings. In addition, the electronic device 110 may be referred to as a `scanning device', a `light detection and ranging (LiDAR) device', or other terms having the same technical meanings.

FIG. 2 illustrates a structure of the electronic device 110 according to various an embodiment of the present disclosure.

The structure exemplified in FIG. 2 may be understood as the structure of the electronic device 110. Hereinafter, the term '... unit', '... device', or the like implies a unit of processing at least one function or operation, and may be implemented in hardware or software or in combination of the hardware and the software.

Referring to FIG. 2, the electronic device 110 includes an optic transmitter 210, an optic receiver 220, a reflector 230, an installation member 240, an actuator 250, and a processor 260.

The optic transmitter 210 emits an initial light to the reflector 230, and the optic receiver 220 receives a light reflected from an object (e.g., the object 120) to be detected. In this case, the initial light may reach the object after being reflected from the reflector 230, and the reflected light may be received by the optic receiver 220 after being reflected from the reflector 230. The optic transmitter 210 may include a laser transmitter or a light emitting diode (LED). A light source generated by the optic transmitter 210 may vary depending on desired light characteristics. The optic receiver 220 may include an avalanche photodiode.

The reflector 230 reflects the initial light emitted from the optic transmitter 210 and the light reflected from the object. The reflector 230 may be tilted or rotated due to the installation member 240 and the actuator 250. At least one side of the reflector 230 is formed of a material that can reflect the light. For example, a top side of the reflector 230 may be covered by the material that can reflect the light.

The installation member 240 connects the reflector 230 and the actuator 250. The installation member 240 may be implemented by sticking, threaded connection, or another suitable attachment means. The actuator 250 controls a direction and angle of an inclination of the reflector 230. For this, the actuator 250 has a function for applying a physical force to the reflector 230. According to various embodiments, the actuator 250 may control the direction and angle of the inclination of the reflector 230 depending on a contact type or a non-contact type.

The processor 260 controls the optic transmitter 210, the optic receiver 220, and the actuator 250. For example, the processor 260 may control a frequency in use for the light transmitted from the optic transmitter 210, provide a signal for controlling the inclination of the reflector 230 to the actuator 250, and perform an arithmetic operation for detecting the object by using information regarding the reflected light provided from the optic receiver 220. According to an embodiment, the processor 260 may calculate a time interval between a time of emitting the initial lights and a time of receiving the reflected lights.

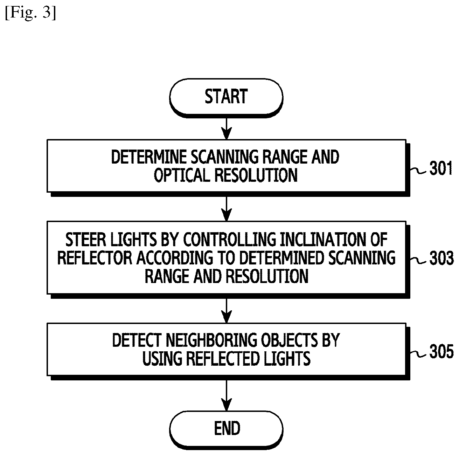

FIG. 3 is a flowchart illustrating an electronic device according to an embodiment of the present disclosure. A method of operating the electronic device 110 is exemplified in FIG. 3.

Referring to FIG. 3, in operation 301, the electronic device determines a scanning range and an optical resolution. Herein, the scanning range may be defined as a direction and an angle with respect to the direction as a physical region to which lights will be emitted. The scanning range may be referred to as a 'field-of-view' or other terms having the same meaning. The optical resolution may be expressed as an angle formed by lights adjacent to each other, and may include one angle value or a plurality of angle values (e.g., a vertical angle and a horizontal angle). However, according to another embodiment, the scanning range and the resolution may be predefined, and in this case, operation 301 may be skipped.

In operation 303, the electronic device steers the lights by controlling an inclination of a reflector according to the determined range and resolution. For example, the electronic device emits the lights by using an optic transmitter (e.g., the optic transmitter 210), and reflects the emitted lights by using the reflector (e.g., the reflector 230). In this case, the electronic device may adjust an inclination angle of the reflector by using an actuator (e.g., the actuator 250), and may steer the light in an intended direction by adjusting the inclination angle. That is, the electronic device may adjust the direction and angle of the inclination of the reflector according to the scanning range determined in operation 301, and may adjust a speed of emitting the lights and a speed of controlling the reflector according to the resolution determined in operation 301.

In operation 305, the electronic device uses the reflected lights to detect at least one object which exists in a neighboring area. For example, the electronic device may receive the lights reflected from the at least one object through an optic receiver (e.g., the optic receiver 220). In addition, the electronic device may use the reflected lights to detect the at least one object. For example, the electronic device may determine a round trip time (RTT) of the lights, determine distances to points at which the respective lights are reflected based on the RTTs, and estimate a shape and a distance to the at least one object based on the distances.

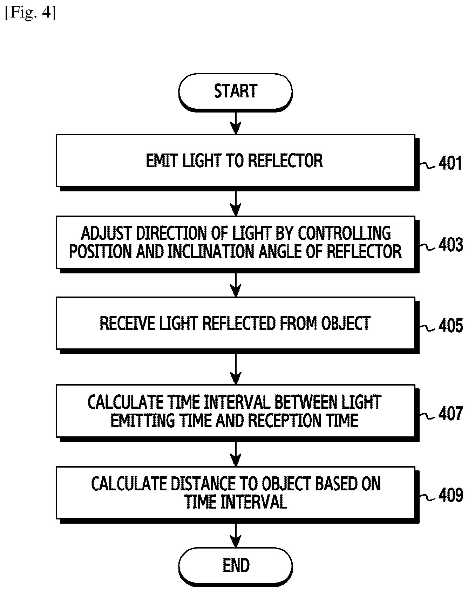

FIG. 4 is another flowchart illustrating an electronic device according to an embodiment of the present disclosure. A method of operating the electronic device 110 is exemplified in FIG. 4.

Referring to FIG. 4, in operation 401, the electronic device emits a light to a reflector (e.g., the reflector 230). In this case, a time of emitting the light is measured and recorded. In operation 403, the electronic device controls a position and inclination angle of the reflector to adjust a direction of the light. The electronic device may use an actuator (e.g., the actuator 250) to control the position and inclination angle of the reflector. In operation 405, the electronic device receives a light reflected from an object. In this case, the electronic device measures and records a time of receiving the light. In operation 407, the electronic device calculates a time interval between a time of emitting the light and a time of receiving the light based on the measured time. In operation 409, the electronic device calculates a distance to the object based on the calculated time interval.

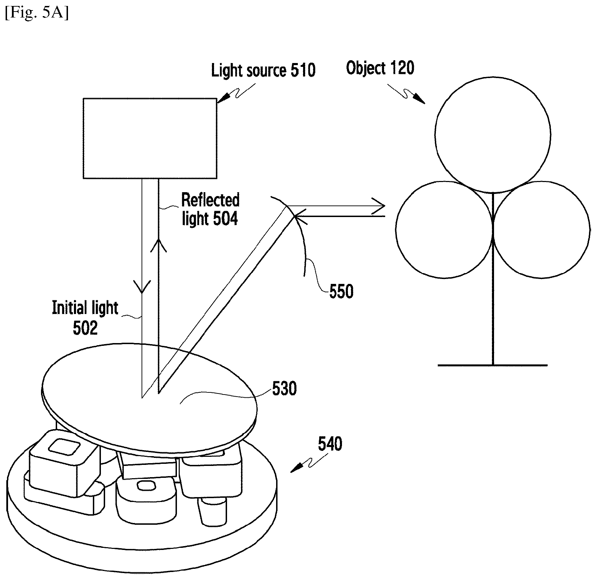

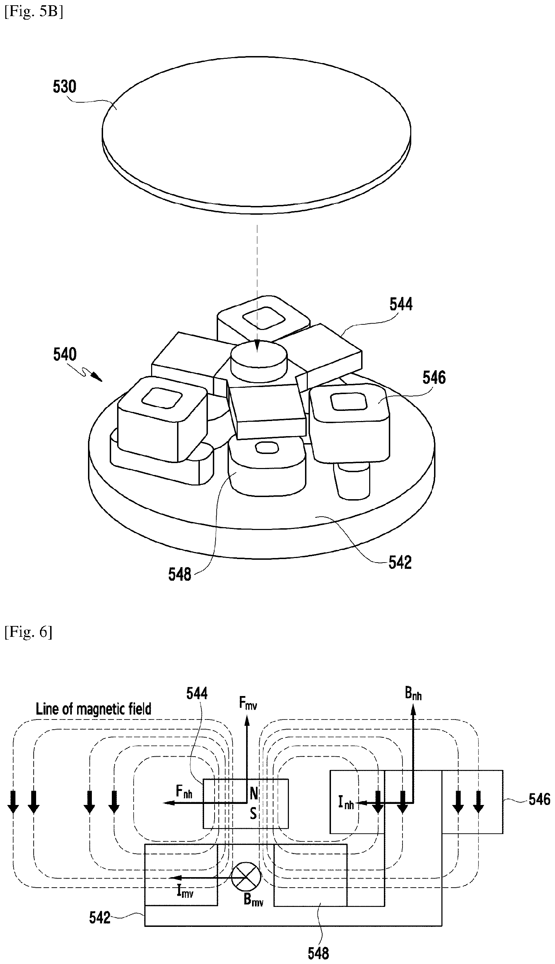

As described above, the electronic device according to various embodiments may use the reflector to reflect the light, thereby freely adjusting the light. For this, the reflector is controlled to have an inclination of an intended direction and angle. In this case, the reflector may be controlled in various manners. According to one embodiment of the invention, the reflector is controlled by a magnetic force, and in this case, the reflector may be referred to as a `maglev reflector'. An embodiment of using the magnetic force is described below with reference to FIG. 5.

FIG. 5A illustrates a structure of an electronic device for controlling a reflector by using a magnetic force according to an embodiment of the present disclosure.

Referring to FIG. 5A, a light source 510 emits an initial light 502 that is reflected by a reflector 530 in different directions according to an inclination of the reflector 530. The inclination (or a position in free space) of the reflector 530 is controlled by a beam deflection device 540 corresponding to the actuator 250. According to an embodiment, a semi-spherical lens 550 may be used to redirect the light in a vertical plane, thereby facilitating to increase a scanning field-of-view in a vertical direction. The beam reflected 504 from the to-be-detected object 120 returns via the reflector 530.

In an embodiment, a receiver is located in proximity to the light source 510. Alternatively, the light source and the receiver may be integrated as a single unit. According to an embodiment, a laser is used as the light source 510. According to another embodiment, an LED may be used as the light source 510. Other suitable light sources may also be used depending on desired light characteristics. In an embodiment, an avalanche photodiode may be used as the receiver. The maglev reflector 530 according to the present disclosure may provide a possibility of a 6-degrees of freedom (DoF) control at a position of the reflector.

FIG. 5B illustrates a reflector and a beam deflection device in an electronic device according to an embodiment of the present disclosure.

Referring to FIG. 5B, a beam deflection device 540 includes a base 542, permanent magnets 544, a maglev reflector 530 attached to the permanent magnets 544, and control coils 546 and 548 mounted on the base 542.

The base 542 may be made of aluminum. In addition, the base 542 may be made of magnesium. The base of a suitable paramagnetic material may be used depending on structural (weight, durability etc.) and economic requirements.

A position of every permanent magnet 544 in the space is defined by an electromagnetic interaction between the permanent magnets 544 and the control coils 546 and 548 to which current is supplied. Three permanent magnets are included in the embodiment of FIG. 5A. Three is the minimum number of magnets used for an operation of the electronic device. However, four or more permanent magnets may be used depending on a particular implementation. The maximum number of permanent magnets may be limited by a size and requirement of the electronic device.

The maglev reflector 530 may be attached to the permanent magnets 544 through a carrier element for permanent magnets. The dashed line with arrow in the figure indicates the attachment of the maglev reflector 530 through the carrier element for permanent magnets. The maglev reflector 530 is rigidly fixed to the carrier element. The attachment may be implemented by sticking, threaded connection, or another suitable attachment means. The carrier element for permanent magnets is made of a paramagnetic material. A top side of the maglev reflector 530 is covered by a material that can reflect a light. For example, the material may be one of silver, anodized aluminum, and another suitable material.

The control coils 546 and 548 include Horizontal (H)-control coils 546 defining a position of the maglev reflector 530 in a horizontal direction and Vertical (V)-control coils 548 defining a position of the maglev reflector 530 in a vertical direction. The control coils 546 and 548 are substantially electromagnets.

FIG. 6 is a cross-sectional view illustrating a suspension according to an embodiment of the present disclosure.

Referring FIG. 6, H-control coils 546 and V-control coils 548, depending on supplied direct current Iₙₕ (for H-control coil) and Iₘᵥ (for V-control coil), can increase or decrease forces Fₙₕ and Fₘᵥ correspondingly and define a position of magnet in horizontal and vertical direction, wherein n is changed from 1 to N, where N is the number of H-control coils, and m is changed from 1 to M, where M is the number of V-control coils. As shown in FIG. 6, according to right-hand screw rule V-control coil 548 when supplied by the direct current influences on the magnet 544 in vertical direction, and H-control coil 546 when supplied by the direct current influences on the magnet 544 in horizontal direction due to interaction of magnetic fields of the magnet 544 and control coils.

In vertical direction the position of magnet is defined by the vector sumof Fₘᵥ force and gravity force applied to magnet. Since the force Fₘᵥ is proportional to the current of the corresponding V-control coil 548 and inversely proportional to the distance between the permanent magnet 544 and the coil, increase or decrease of the current leads to movement of the permanent magnet relative to the V-control coil 548. Increase of the currentleads to moving the magnet 544 away from the V-control coil 548, and decrease of the current leads to moving the magnet 544 towards the V-control coil 548. When the magnet 544 is raised the current of the V-control coil 548 shall be increased in order to keep the magnet 544 at the raised position.

It is possible to set the inclination angle of the reflector 530 in any direction by controlling altitude of three points of the reflector 530. Maximum inclination angle is defined by a construction and power requirements of the electronic device.

In horizontal direction the position of magnet is defined by the mutualcompensation of the forces Fₙₕ distributed along cross-section of H-control coils 546 and their moments.

In horizontal direction the position of magnet is defined by the mutualcompensation of the forces Fₙₕ distributed along cross-section of H-control coils 546 and their moments.

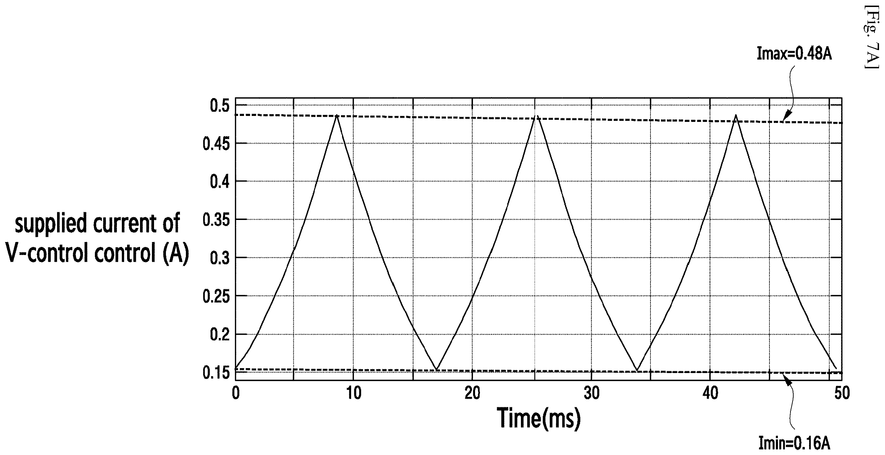

FIG. 7A is a graph illustrating supplied current of a V-control coil over time according to an embodiment of the present disclosure.

The graph of FIG. 7A is illustrated for explanation. Other embodiments of the graph may be used within the scope of the present disclosure. In the graph, the current has a shape corresponding to a rotation of the reflector 530 about an axis. A force Fₘᵥ is in proportion to current of the V-control coil 548 and an increase/decrease of the current leads to a movement of the permanent magnet 544 for the V-control coil 548. Therefore, in the graph, Iₘₐₓ(=0.48A) implies current supplied to the V-control coil when the permanent magnet 544 corresponds to a maximum inclination angle, and Iₘᵢₙ (=0.16A) implies currentsuppliedto the V-control coil when the permanent magnetic 544 corresponds to a minimum inclination angle.

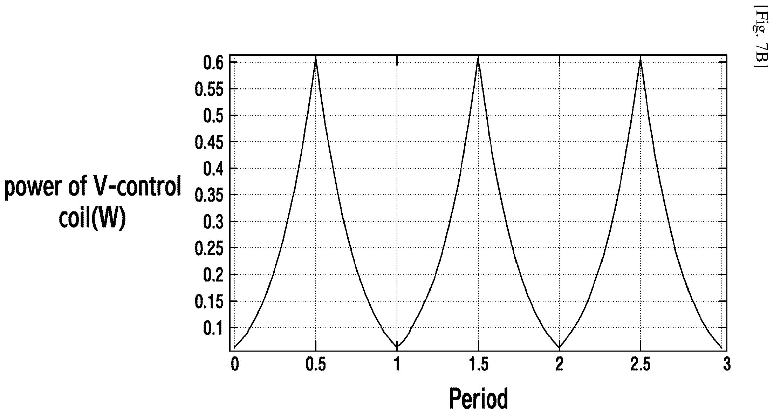

FIG. 7B is a graph illustrating supplied current of a V-control coil depending on a typical period according to an embodiment of the present disclosure.

The graph of FIG. 7B is illustrated for explanation. Other embodiments of the graph may be used within the scope of the present disclosure. In the graph, power has a shape corresponding to a rotation of the reflector 530 about an axis, and the period represents a rotation period of the reflector 530. The power is measured through an internal resistor of the V-control coil. During one period, one V-control coil consumes power of 0.3W on average, and three V-control coils consume power of 0.9W on average.

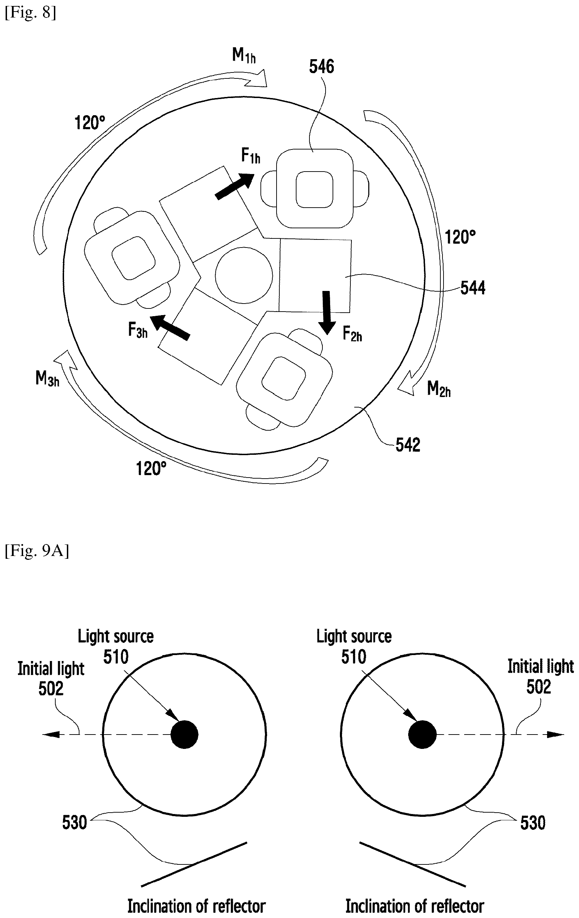

FIG. 8 is a plan view illustrating a stabilization environment in a horizontal direction according to an embodiment of the present disclosure.

Referring to FIG. 8, forces F₁ₕ, F₂ₕ, and F₃ₕ are directed in a clockwise direction to define a principle of interaction between the permanent magnets 544 and the H-control coils 546. However, the forces F₁ₕ, F₂ₕ, and F₃ₕ may be directed in different directions and have different values depending on currentsuppliedto the control coils 546 and 548 interacted with the permanent magnets 544 so as to compensate the forces F₁ₕ, F₂ₕ, and F₃ₕ and their moments M₁ₕ, M₂ₕ, and M₃ₕ. Therefore, a position and inclination angle of the maglev reflector 530 may be defined by controlling the current supplied to control coils 546 and 548.

Direct current is supplied to the control coils 546 and 548. In case of interruption of the current supplied to the control coils 546 and 548, the maglev reflector 530 will be pulled down on the coils 546 and 548 mounted on the base 542 due to influence of gravity. According to an embodiment, the maglev reflector 530 may be pulled down on a special support(s) (not shown) provided on the base 542. In case of restoration of the current supplied to the control coils 546 and 548, the maglev reflector 530 will levitate again.

A direction of the force Fₙₕ is defined by the right-hand rule with vectors Bₙₕ and Iₙₕ, where Bₙₕ is a magnetic field vector of an n^{th} H-control coil. A direction of the force F ₘᵥ is defined by the right-hand rule with vectors Bₘᵥ and Iₘᵥ, where Bₘᵥ is a magnetic field vector of an m^{th} V-control-coil. In a vertical direction, Fₘᵥ is balanced with gravity. In the present embodiment, the electronic device in a horizontal direction is balanced by mutualcompensation of the forces F₁ₕ, F₂ₕ, and F₃ₕ and their moments M₁ₕ, M₂ₕ, and M₃ₕ as shown in FIG. 8.

According to an embodiment, the reflector may have no mechanical connection with other elements of the electronic device due to magnetic levitation. A 2D scanning possibility is further provided by using 1 (single) channel including one light source and one receiver.

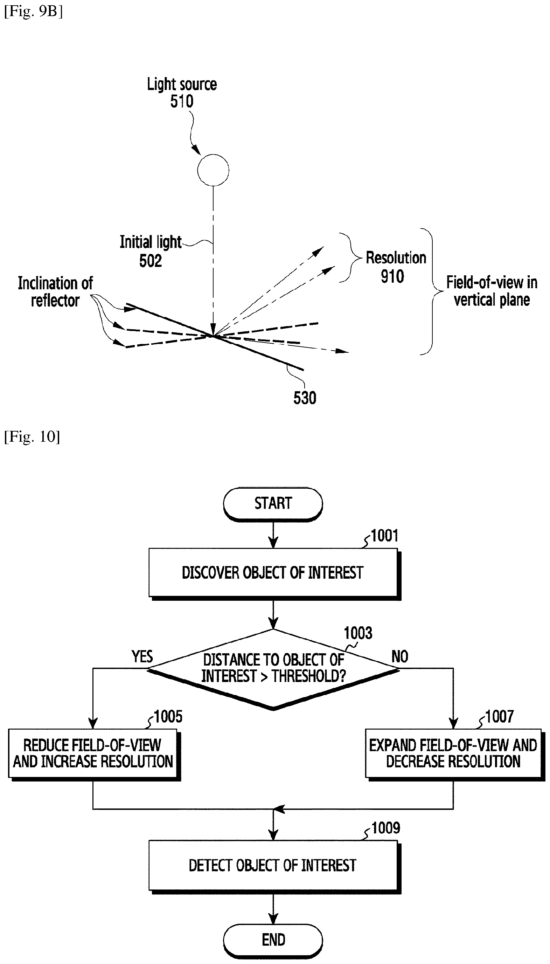

FIG. 9A illustrates a scanning operation of a horizontal plane in an electronic device based on a maglev reflector according to an embodiment of the present disclosure. FIG. 9B illustrates a scanning operation of a vertical plane in an electronic device based on a maglev reflector according to an embodiment of the present disclosure.

As shown in FIG. 9A and FIG. 9B, a scanning control in horizontal and vertical planes is provided by controlling an inclination angle of the reflector 530. It is possible to control the inclination angle of the reflector 530 by controlling current in different control coils.

As shown in FIG. 9A, a balance of the electronic device in a horizontal plane is provided by H-control coils. A continuous control of the inclination of the reflector 530 may allow an initial light emitted from the light source 502 to rotate on the horizontal plane. Therefore, it is possible to scan each angular sector and to control a width of the sector.

As shown in FIG. 9B, the less the current of the V-control coil, the less the inclination angle (deflection from the horizontal plane) of the reflector 530 in proximity to the control coil, and vice versa. Therefore, it is possible to set any inclination angle of the reflector 530 in proximity to three V-control coils by controlling different current values of the control coils. Accordingly, the position is provided. An angle resolution 910 in the vertical plane is defined by current supplied to the control coils.

According to the aforementioned various embodiments, a LiDAR scanning device may be implemented in a form of a compact device. In addition, various embodiments provide an electronic (adaptive) control for the LiDAR scanning device and a self-calibration possibility. In addition, according to various embodiments, the LiDAR scanning device may dynamically change a field-of-view and an angle resolution. In addition, the LiDAR scanning device according to various embodiments may provide a vibration resistance of the maglev reflector up to 10g (g is gravity acceleration). In addition, various embodiments decrease power consumption in the LiDAR scanning device.

Another embodiment of the present disclosure proposes a fully electronic (adaptive) control for a scanning device and a self-calibration possibility. Self-calibration may be needed after planned or unplanned power turn-off. Adaptive control is provided at every position of a beam deflection device.

The electronic device according to the aforementioned various embodiment may adaptively adjust a scanning range and a resolution by using the reflector. Accordingly, scanning suitable for a situation may be performed. That is, the electronic device according to various embodiments may be used in various scenarios. For example, the electronic device according to various embodiments may be used to detect objects (obstacles and moving vehicles) when driving a car. The electronic device according to various embodiments are advantageously used in an autonomous ground vehicles. In addition, the electronic device according to various embodiments may be used in navigation based on a 3-dimension (3D) scanning map to control service robots.

According to one embodiment, the electronic device may adjust the scanning range and the resolution for more specific scanning in a situation where a specific object of interest is discovered. For example, in the presence of the object, the electronic device may increase an angle resolution for a direction of the object of interest. Alternatively, in case of long-distance scanning, the electronic device may reduce a field-of-view and increase the angle resolution. Alternatively, in case of short-distance scanning, the electronic device may expand the filed-of-view and decrease the angle resolution.

FIG. 10 is a flowchart illustrating a fully adaptive control for an electronic device according to an embodiment of the present disclosure. Operations in a situation where an object of interest is discovered are exemplified in FIG. 10 as a method of operating the electronic device 100.

Referring to FIG. 10, in operation 1001, the electronic device discovers the object of interest. For example, the electronic device may determine whether there are the object of interest and an object having a similar shape and size greater than or equal to a specific level among objects detected through a scanning operation. That is, the electronic device has specific information stored therein and including at least one of a size and shape of an object defined as the object of interest, and may examine a likelihood with respect to the object detected through the scanning operation.

In operation 1003, the electronic device determines whether a distance to the object of interest is greater than a predefined threshold distance. Herein, the threshold distance may be predefined as a value for identifying a long distance and a short distance.

If the distance to the object of interest is greater than the threshold distance, in operation 1005, the electronic device reduces a field-of-view and increases a resolution. That is, the electronic device may reduce the field-of-view with respect to a direction towards the object of interest. For example, the electronic device may decrease a maximum inclination angle of permanent magnets by decreasing a range of adjusting a value of current supplied to at least one of V-control coils, thereby reducing the field-of-view and increasing the angle resolution.

On the other hand, if the distance to the object of interest is less than or equal to the threshold distance, in operation 1007, the electronic device expands the field-of-view and reduces the resolution. That is, the electronic device may expand the field-of-view with respect to the direction towards the object of interest. For example, the electronic device may increase a maximum inclination angle of permanent magnets by increasing a range of adjusting a value of current supplied to at least one of V-control coils, thereby expanding the field-of-view and reducing the angle resolution.

In operation 1009, the electronic device detects the object of interest. That is, the electronic device may emit lights according to the field-of-view and resolution adjusted in operation 1005 or operation 1007, and may use the reflected lights to scan the object of interest in greater detail. For example, the electronic device may adjust an inclination angle of a reflector according to the adjusted field-of-view and resolution by controlling values of current applied to the control coils.

According to another embodiment, the electronic device may adjust a scanning range and a resolution depending on a part of an allocated range in the entire scanning range. For example, a method for coordinating a plurality of scanning devices disposed to a specific apparatus (e.g., a vehicle) may be applied. The scheme of coordinating the plurality of scanning devices may be referred to as a `scanning pattern control' or `scanning scheduling'. If the plurality of scanning devices are disposed to different lateral sides of the vehicle, a field-of-view of each scanning device may be controlled to cover an observation region in the vehicle.

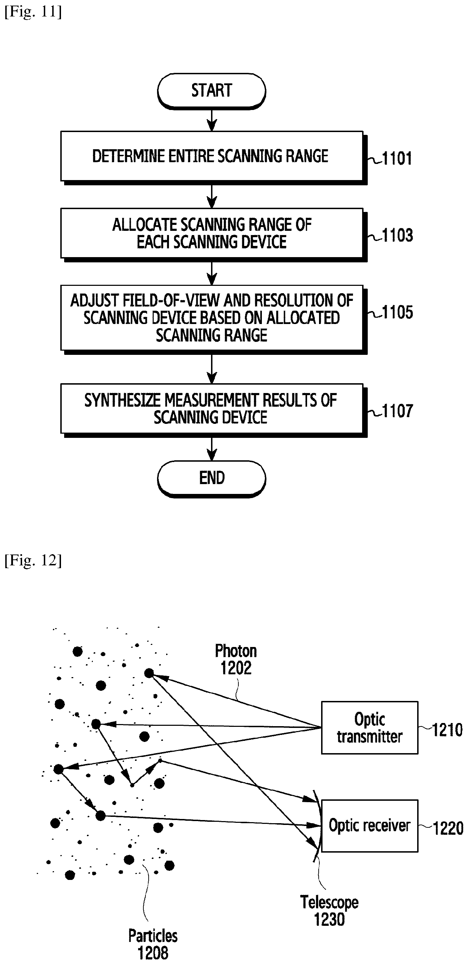

FIG. 11 is a flowchart illustrating a coordination of a plurality of scanning devices disposed to an apparatus according to an embodiment of the present disclosure.

For a procedure of FIG. 11, a separate coordinating device for coordinating the plurality of scanning devices may be used, or one of the plurality of scanning devices may control other scanning devices. Hereinafter, although the coordinating device is exemplified as an operational entity for convenience of explanation, similar operations may be performed by one of the scanning devices.

Referring to FIG. 11, in operation 1101, the coordinating device determines the entire scanning range. That is, the coordinating device determines a specific side and a specific range in which scanning will be performed by the plurality of scanning devices disposed to an apparatus (e.g., a vehicle).

In operation 1103, the coordinating device allocates the scanning range to each of the plurality of scanning devices. That is, the electronic device may divide the entire scanning range determined in operation 1101 to allocate it to each of the scanning devices, so as to detect a range to which one scanning device is allocated. In this case, the scanning range of each scanning device may partially overlap. In addition, the coordinating device may further determine a resolution of each scanning device.

In operation 1105, the coordinating device adjusts a field-of-view and angle resolution of each scanning device based on the allocated scanning range. For this, the coordinating device may provide information indicating at least one of the scanning range and the resolution to each scanning device.

In operation 1107, the coordinating device synthesizes scanning results based on the respective scanning devices. Accordingly, the coordinating device may acquire the synthesized scanning result for a surrounding environment of the apparatus. For example, the coordinating device may generate a 3D scanning map based on collected data.

FIG. 12 illustrates the concept of LiDAR for atmospheric measurement according to an embodiment of the present disclosure. A scanning technique according to various embodiments may be used to estimate particle density.

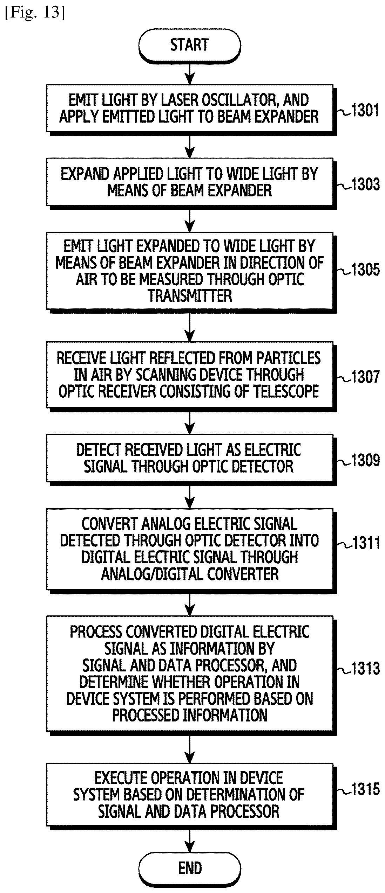

As shown in FIG. 12, a photon 1202 transmitted from an optic transmitter 1210 is reflected from particles (e.g., aerosols or molecules) 1208 in the air, and thereafter is received by an optic receiver 1220. Photons 1202 received by the receiver 1220 are collected by a telescope 1230. In this case, how long distance the photons 1202 reciprocate may be calculated based on the speed of light (~3×10⁸m/s). An embodiment regarding scanning on the particles 1208 is described below with reference to FIG. 13.

FIG. 13 is a flowchart illustrating an atmospheric measurement service based on LiDAR according to an embodiment of the present disclosure.

A method of operating an electronic device is exemplified in FIG. 13. Referring to FIG. 13, in operation 1301, a laser oscillator emits a light, and the emitted light is applied to a beam expander. In operation 1303, the applied light is expanded to a wide light by means of the beam expander for optimized scanning. The beam expander may consist of two pairs of lenses having the same focal position. In operation 1305, the light expanded to the wide light by the beam expander is emitted in a direction of the air to be measured through the optic transmitter. The emitted light is scattered in several directions by being collided with particles in the air. In operation 1307, the light reflected from the particles in the air is received by the scanning device through the optic receiver consisting of a telescope. The light may be more effectively received through the telescope. In operation 1309, the received light is detected as an electric signal through an optic detector. The optic detector is configured to convert an optical signal into an electric signal, and an avalanche photodiode may be used. In operation 1311, an analog electric signal is converted into a digital electric signal through an analog/digital converter for more effective signal processing (e.g., storing, convenience in manipulation, noise, etc.). In operation 1313, a signal and data processor processes the converted digital electric signal as information, and determines whether an operation in a device system is performed based on the processed information. In operation 1315, an operation (e.g., opening/closing a vehicle door, controlling an air conditioner) in the device system is performed based on the determination of the signal and data processor.

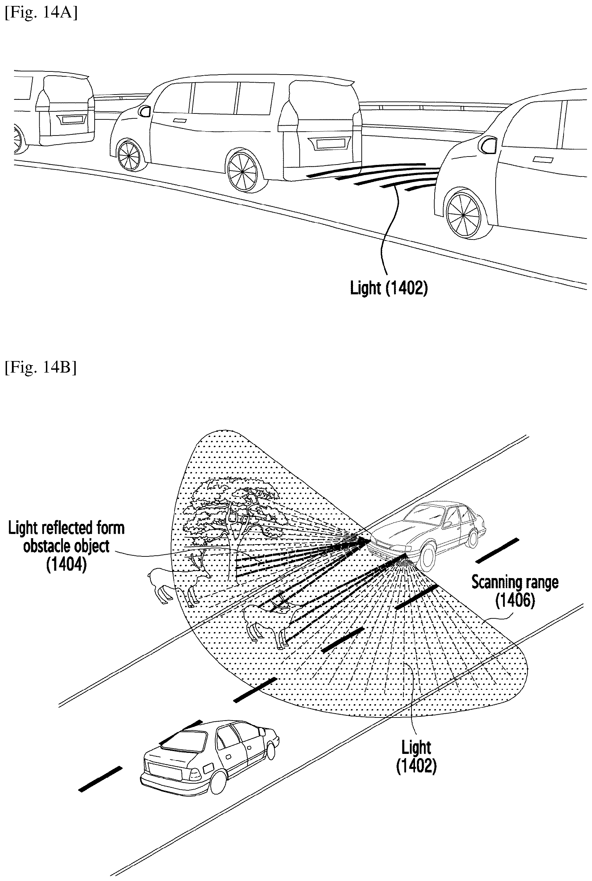

FIGS. 14A and 14B illustrate examples of detecting an object on a car according to various embodiments of the present disclosure. The present disclosure is used to detect objects such as obstacles and moving vehicles when driving a car.

As shown in FIG. 14A, the present disclosure can detect a preceding car by using an emitted light 1402, thereby avoiding a collision with the preceding car and sensing a lane or the like. As shown in FIG. 14B, the present disclosure may use the emitted light 1402 and receive a light 1404 reflected from an obstructive object in a scanning range 1406 to detect an obstructive object or the like. Therefore, the present disclosure is advantageously used in an autonomous ground vehicle.

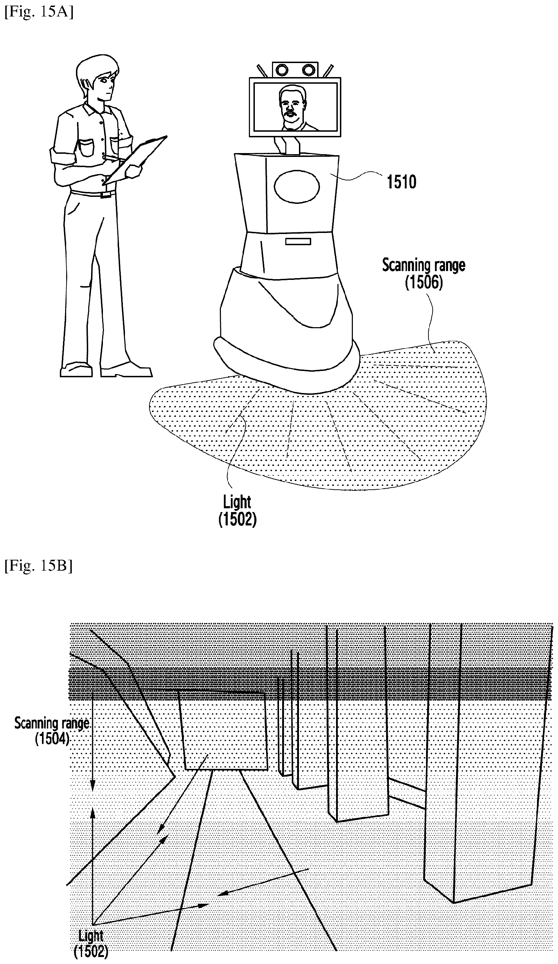

FIG. 15A illustrates an example of a service robot controlled by a navigation based on a 3D scanning map according to an embodiment of the present disclosure. FIG. 15B illustrates an example of a 3D scanning map according to an embodiment of the present disclosure.

The present disclosure may be used in a navigation based on a 3D scanning map for controlling service robots (e.g., personal service robots for healthcare, cooking, or the like). An example of a personal service robot 1510 for healthcare is illustrated in FIG. 15A. The service robot 1510 uses a scanning device of the present disclosure to emit the light 1502, and performs 3D scanning of a scanning range 1506. As shown in FIG. 15B, the scanning device of the service robots emits the light 1502 and receives a light 1504 reflected from an object to perform 3D scanning, and creates a 3D scanning map. The service robots may be controlled through the navigation based on the 3D scanning map.

In a method and an electronic device according to various embodiments of the present disclosure, a light for detecting an object is controlled by using a reflector, thereby being able to detect the object by using a small number of light sources and being able to provide a long lifespan of the device.

Methods based on the embodiments disclosed in the claims and/or specification of the present disclosure can be implemented in hardware, software, or a combination of both.

When implemented in software, a non-transitory computer readable recording medium for storing one or more programs (i.e., software modules) can be provided. The one or more programs stored in the non-transitory computer readable recording medium are configured for execution performed by one or more processors in the electronic device. The one or more programs include instructions for allowing the electronic device to execute the methods based on the embodiments disclosed in the claims and/or specification of the present disclosure.

The program (i.e., the software module or software) can be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs) or other forms of optical storage devices, and a magnetic cassette. Alternatively, the program can be stored in a memory configured in combination of all or some of these storage media. In addition, the configured memory can be plural in number.

Further, the program can be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device can have an access to a device for performing an embodiment of the present disclosure via an external port. In addition, an additional storage device on a communication network can have an access to the device for performing the embodiment of the present disclosure.

## Claims

1. An electronic device comprising:
a transmitter (210) configured to emit light beams;
a reflector (230) configured to reflect the light beams;
an actuator (250) configured to steer the light beams towards an external object by controlling a direction and angle of an inclination of the reflector;
a receiver (220) configured to receive the light beams reflected from the external object; and
at least one processor (260) configured to detect the external object by using the received reflected light beams;
wherein the reflector is levitated from the actuator by an electromagnetic interaction of permanent magnets attached to the reflector and control coils included in the actuator;
wherein the actuator (250) comprises:
a base (542), and
the control coils (546, 548) disposed on the base,
wherein the control coils comprise:
horizontal-control coils (546) configured to control a position of the reflector in a horizontal direction, and
vertical-control coils (548), different from the horizontal-control coils (546), configured to control a position of the reflector in a vertical direction,
wherein when each of the vertical-control coils (548) is supplied with a respective first direct current, a vertical force proportional to the respective first direct current is applied to the permanent magnets (544) in a vertical direction, and when
each of the horizontal-control coils (546) is supplied by a respective second direct current, a horizontal force proportional to the respective second direct current is applied to the permanent magnets (544) in a horizontal direction,
wherein the at least one processor (260) is configured to control the direction and angle of the inclination of the reflector by controlling the direct currents supplied to the control coils (546, 548).

2. The electronic device of claim 1, further comprising:
a lens (550) configured to expand a scanning field-of-view.

3. The electronic device of claim 1, wherein the at least one processor is configured to measure a distance to the external object based on a time interval between a time of emitting the light beam and a time of receiving the reflected light beam.

4. The electronic device of claim 1, wherein the at least one processor is configured to:
determine a scanning range and a resolution of the light beam; and
control the actuator according to the scanning range and the resolution.

5. The electronic device of claim 4, wherein if the external object is a predefined object of interest, the at least one processor is configured to determine again the scanning range and the resolution.

6. The electronic device of claim 5, wherein the at least one processor is configured to expand or reduce the scanning range based on the distance to the object of interest.

7. The electronic device of claim 4, wherein the at least one processor is configured to:
control to respectively allocate the scanning range to the electronic device and at least one different electronic device; and
scan in the scanning range allocated to the electronic device.

8. The electronic device of claim 4, wherein the at least one processor is configured to:
control to receive information regarding the scanning range allocated to the electronic device from another device, and
scan in the scanning range allocated to the electronic device.

9. The electronic device of claim 1, wherein the receiver comprises an avalanche photodiode.

10. The electronic device of claim 1, wherein the transmitter comprises a laser transmitter or a light emitting diode, LED.

11. The electronic device of claim 1, wherein at least one side of the reflector is formed of silver or anodized aluminum.

12. A method performed by an electronic device, the method comprising:
emitting, by a transmitter, light beams;
steering, by an actuator, the light beams towards an external object by controlling a direction and angle of an inclination of a reflector;
receiving, by a receiver, the light beams reflected from the external object through the reflector; and
detecting, by at least one processor, the external object by using the received reflected light beams,
wherein the reflector is levitated from the actuator by an electromagnetic interaction of permanent magnets attached to the reflector and control coils included in the actuator, wherein the actuator (250) comprises a base (542) and the control coils (546, 548) disposed on the base, and wherein the control coils comprise horizontal-control coils (546) and vertical-control coils (548), different from the horizontal-control coils (546),
wherein a position of the reflector is controlled in a horizontal direction by means of the at least one horizontal-control coil and in a vertical direction by means of the at least one vertical-control coil,
wherein when each of the vertical-control coils (548) is supplied with a respective first direct current, a vertical force proportional to the respective first direct current is applied to the permanent magnets (544) in a vertical direction, and when each of the horizontal-control coils (546) is supplied by a respective second direct current, a horizontal force proportional to the respective second direct current is applied to the permanent magnets (544) in a horizontal direction,
wherein the direction and angle of the inclination of the reflector is defined by controlling the direct currents supplied to the control coils (546, 548).

13. The method of claim 12, wherein the detecting of the external object comprises measuring a distance to the external object based on a time interval between a time of emitting the light beam and a time of receiving the reflected light beam.

14. The method of claim 12, further comprising:
determining a scanning range and a resolution of the light beam; and
controlling an actuator for controlling the reflector according to the scanning range and the resolution.

## Patentansprüche

1. Elektronische Vorrichtung umfassend:
einen Sender (210), der zum Aussenden von Lichtstrahlen konfiguriert ist;
einen Reflektor (230), der zum Reflektieren der Lichtstrahlen konfiguriert ist;
einen Aktuator (250), der zum Lenken der Lichtstrahlen durch Steuern einer Richtung und eines Neigungswinkels des Reflektors auf ein externes Objekt, konfiguriert ist;
einen Empfänger (220), der zum Empfangen der von dem externen Objekt reflektierten Lichtstrahlen konfiguriert ist; und
mindestens einen Prozessor (260), der zum Erkennen des externen Objekts mithilfe der empfangenen reflektierten Lichtstrahlen konfiguriert ist;
wobei der Reflektor durch eine elektromagnetische Wechselwirkung von am Reflektor angebrachten Permanentmagneten und im Aktuator enthaltenen Steuerspulen vom Aktuator schwebend gehalten wird;
wobei der Aktuator (250) Folgendes umfasst:
eine Basis (542), und
Steuerspulen (546, 548), die auf der Basis angeordnet sind, wobei die Steuerspulen Folgendes umfassen:
Horizontalsteuerspulen (546), die zum Steuern einer Position des Reflektors in horizontaler Richtung konfiguriert sind, und
Vertikalsteuerspulen (548), die sich von den Horizontalsteuerspulen (546) unterscheiden und zum Steuern einer Position des Reflektors in vertikaler Richtung konfiguriert sind,
wobei, wenn jede der Vertikalsteuerspulen (548) mit einem entsprechenden ersten Gleichstrom versorgt wird, eine vertikale Kraft proportional zum jeweiligen ersten Gleichstrom auf die Permanentmagnete (544) in vertikaler Richtung ausgeübt wird, und wenn jede der Horizontalsteuerspulen (546) mit einem jeweiligen zweiten Gleichstrom versorgt wird, wird eine horizontale Kraft proportional zum jeweiligen zweiten Gleichstrom in horizontaler Richtung auf die Permanentmagnete (544) ausgeübt,
wobei der mindestens eine Prozessor (260) zum Steuern der Richtung und des Neigungswinkels des Reflektors konfiguriert ist, indem er die den Steuerspulen (546, 548) zugeführten Gleichströme steuert.

2. Elektronische Vorrichtung nach Anspruch 1, ferner umfassend:
eine Linse (550), die zum Erweitern eines Scanbereichs konfiguriert ist.

3. Elektronische Vorrichtung nach Anspruch 1, wobei der mindestens eine Prozessor zum Messen einer Entfernung zum externen Objekt basierend auf einem Zeitintervall zwischen einem Zeitpunkt des Aussendens des Lichtstrahls und einem Zeitpunkt des Empfangs des reflektierten Lichtstrahls konfiguriert ist.

4. Elektronische Vorrichtung nach Anspruch 1, wobei der mindestens eine Prozessor konfiguriert ist zum:
Bestimmen eines Scanbereichs und einer Auflösung des Lichtstrahls; und
Steuern des Aktuators entsprechend des Scanbereichs und der Auflösung.

5. Elektronische Vorrichtung nach Anspruch 4, wobei, wenn das externe Objekt ein vordefiniertes Objekt von Interesse ist, der mindestens eine Prozessor dazu konfiguriert ist, den Scanbereich und die Auflösung erneut zu bestimmen.

6. Elektronische Vorrichtung nach Anspruch 5, wobei der mindestens eine Prozessor zum Erweitern oder Verringern des Scanbereichs basierend auf der Entfernung zum Objekt von Interesse konfiguriert ist.

7. Elektronische Vorrichtung nach Anspruch 4, wobei der mindestens eine Prozessor konfiguriert ist zum:
Steuern, um den Scanbereich jeweils der elektronischen Vorrichtung und mindestens einer anderen elektronischen Vorrichtung zuzuweisen; und
Scannen im Scanbereich, der der elektronischen Vorrichtung zugewiesen ist.

8. Elektronische Vorrichtung nach Anspruch 4, wobei der mindestens eine Prozessor konfiguriert ist zum:
Steuern zum Empfangen von Informationen über den der elektronischen Vorrichtung zugewiesenen Scanbereich von einer anderen Vorrichtung,
und
Scannen im Scanbereich, der der elektronischen Vorrichtung zugewiesen ist.

9. Elektronische Vorrichtung nach Anspruch 1, wobei der Empfänger eine Lawinenfotodiode umfasst.

10. Elektronische Vorrichtung nach Anspruch 1,wobei der Sender einen Lasersender oder eine Leuchtdiode, LED, umfasst.

11. Elektronische Vorrichtung nach Anspruch 1, wobei mindestens eine Seite des Reflektors aus Silber oder eloxiertem Aluminium besteht.

12. Verfahren, das von einer elektronischen Vorrichtung ausgeführt wird, wobei das Verfahren Folgendes umfasst:
Aussenden von Lichtstrahlen durch einen Sender;
Lenken der Lichtstrahlen durch einen Aktuator in Richtung eines externen Objekts durch Steuern einer Richtung und eines Neigungswinkels eines Reflektors;
Empfangen der von dem externen Objekt durch den Reflektor reflektierten Lichtstrahlen durch einen Empfänger; und
Erkennen des externen Objekts durch mindestens einen Prozessor unter Verwendung der empfangenen reflektierten Lichtstrahlen,
wobei der Reflektor durch eine elektromagnetische Wechselwirkung von am Reflektor angebrachten Permanentmagneten und im Aktuator enthaltenen Steuerspulen vom Aktuator schwebend gehalten wird, wobei der Aktuator (250) eine Basis (542) und die auf der Basis angeordneten Steuerspulen (546, 548) umfasst, und wobei die Steuerspulen Horizontalsteuerspulen (546) und Vertikalsteuerspulen (548) umfassen, die sich von den Horizontalsteuerspulen (546) unterscheiden,
wobei eine Position des Reflektors in horizontaler Richtung mittels der mindestens einen Horizontalsteuerspule und in vertikaler Richtung mittels der mindestens einen Vertikalsteuerspule gesteuert wird,
wobei, wenn jede der Vertikalsteuerspulen (548) mit einem jeweiligen ersten Gleichstrom versorgt wird, eine vertikale Kraft proportional zum jeweiligen ersten Gleichstrom auf die Permanentmagnete (544) in vertikaler Richtung ausgeübt wird, und wenn jede der Horizontalsteuerspulen (546) mit einem jeweiligen zweiten Gleichstrom versorgt wird, wird eine horizontale Kraft proportional zum jeweiligen zweiten Gleichstrom in horizontaler Richtung auf die Permanentmagnete (544) ausgeübt,
wobei die Richtung und der Neigungswinkel des Reflektors durch Steuern der den Steuerspulen (546, 548) zugeführten Gleichströme definiert werden.

13. Verfahren nach Anspruch 12, wobei das Erkennen des externen Objekts das Messen einer Entfernung zum externen Objekt basierend auf einem Zeitintervall zwischen einem Zeitpunkt des Aussendens des Lichtstrahls und einem Zeitpunkt des Empfangs des reflektierten Lichtstrahls umfasst.

14. Verfahren nach Anspruch 12, ferner umfassend:
Bestimmen eines Scanbereichs und einer Auflösung des Lichtstrahls; und
Steuern eines Aktuators zum Steuern des Reflektors entsprechend dem Scanbereich und der Auflösung.

## Revendications

1. Dispositif électronique comprenant :
un émetteur (210) configuré pour émettre des faisceaux lumineux;
un réflecteur (230) configuré pour réfléchir les faisceaux lumineux ;
un actionneur (250) configuré pour diriger les faisceaux lumineux vers un objet externe en contrôlant une direction et un angle d'inclinaison du réflecteur ;
un récepteur (220) configuré pour recevoir les faisceaux lumineux réfléchis par l'objet externe ; et
au moins un processeur (260) configuré pour détecter l'objet externe en utilisant les faisceaux lumineux réfléchis reçus ;
où le réflecteur est soulevé de l'actionneur par une interaction électromagnétique entre des aimants permanents fixés au réflecteur et des bobines de contrôle incluses dans l'actionneur ;
où l'actionneur (250) comprend :
une base (542), et
les bobines de contrôle (546, 548) disposées sur la base,
où les bobines de contrôle comprennent :
des bobines de contrôle horizontal (546) configurées pour contrôler une position du réflecteur dans une direction horizontale, et
des bobines de contrôle vertical (548), différentes des bobines de contrôle horizontal (546), configurées pour contrôler une position du réflecteur dans une direction verticale,
où lorsque chacune des bobines de contrôle vertical (548) est alimentée par un premier courant continu respectif, une force verticale proportionnelle au premier courant continu respectif est appliquée aux aimants permanents (544) dans une direction verticale, et lorsque chacune des bobines de contrôle horizontal (546) est alimentée par un deuxième courant continu respectif, une force horizontale proportionnelle au deuxième courant continu respectif est appliquée aux aimants permanents (544) dans une direction horizontale,
où l'au moins un processeur (260) est configuré pour contrôler la direction et l'angle d'inclinaison du réflecteur en contrôlant les courants directs fournis aux bobines de contrôle (546, 548).

2. Dispositif électronique selon la revendication 1, comprenant en outre :
une lentille (550) configurée pour étendre un champ de vision de balayage.

3. Dispositif électronique selon la revendication 1, où l'au moins un processeur est configuré pour mesurer une distance à l'objet externe sur la base d'un intervalle de temps entre un temps d'émission du faisceau lumineux et un temps de réception du faisceau lumineux réfléchi.

4. Dispositif électronique selon la revendication 1, où l'au moins un processeur est configuré pour :
déterminer une plage de balayage et une résolution du faisceau léger ; et
contrôler l'actionneur selon la plage de balayage et la résolution.

5. Dispositif électronique selon la revendication 4, où, si l'objet externe est un objet d'intérêt prédéfini, l'au moins un processeur est configuré pour déterminer à nouveau la plage de balayage et la résolution.

6. Dispositif électronique selon la revendication 5, où l'au moins un processeur est configuré pour étendre ou réduire la plage de balayage sur la base de la distance à l'objet d'intérêt.

7. Dispositif électronique selon la revendication 4, où l'au moins un processeur est configuré pour :
contrôler pour attribuer respectivement la plage de balayage au dispositif électronique et à au moins un dispositif électronique différent ; et
effectuer un balayage dans la plage de balayage attribuée au dispositif électronique.

8. Dispositif électronique selon la revendication 4, où l'au moins un processeur est configuré pour :
contrôler pour recevoir des informations concernant la plage de balayage attribuée au dispositif électronique provenant d'un autre dispositif, et
effectuer un balayage dans la plage de balayage attribuée au dispositif électronique.

9. Dispositif électronique selon la revendication 1, où le récepteur comprend une photodiode à avalanche.

10. Dispositif électronique selon la revendication 1, où l'émetteur comprend un émetteur laser ou une diode électroluminescente, LED.

11. Dispositif électronique selon la revendication 1, où au moins un côté du réflecteur est formé d'argent ou d'aluminium anodisé.

12. Procédé effectué par un dispositif électronique, le procédé comprenant :
émettre, par un émetteur, des faisceaux lumineux ;
diriger, par un actionneur, les faisceaux lumineux vers un objet externe en contrôlant la direction et l'angle d'inclinaison d'un réflecteur ;
recevoir, par un récepteur, les faisceaux lumineux réfléchis par l'objet externe à travers le réflecteur ; et
détecter, par au moins un processeur, l'objet externe en utilisant les faisceaux lumineux réfléchis reçus,
où le réflecteur est soulevé de l'actionneur par une interaction électromagnétique entre des aimants permanents fixés au réflecteur et des bobines de contrôle incluses dans l'actionneur, où l'actionneur (250) comprend une base (542) et les bobines de contrôle (546, 548) disposées sur la base, et où les bobines de contrôle comprennent des bobines de contrôle horizontal (546) et des bobines de contrôle vertical (548), différentes des bobines de contrôle horizontal (546),
où une position du réflecteur est contrôlée dans une direction horizontale au moyen de l'au moins une bobine de contrôle horizontal et dans une direction verticale au moyen de l'au moins une bobine de contrôle vertical,
où, lorsque chacune des bobines de contrôle vertical (548) est alimentée par un premier courant continu respectif, une force verticale proportionnelle au premier courant continu respectif est appliquée aux aimants permanents (544) dans une direction verticale, et lorsque chacune des bobines de contrôle horizontal (546) est alimentée par un deuxième courant continu respectif, une force horizontale proportionnelle au deuxième courant continu respectif est appliquée aux aimants permanents (544) dans une direction horizontale,
où la direction et l'angle d'inclinaison du réflecteur est définie en contrôlant les courants directs fournis aux bobines de contrôle (546, 548).

13. Procédé selon la revendication 12, où la détection de l'objet externe comprend mesurer une distance à l'objet externe sur la base d'un intervalle temporel entre un temps d'émission du faisceau lumineux et un temps de réception du faisceau lumineux réfléchi.

14. Procédé selon la revendication 12, comprenant en outre :
déterminer une plage de balayage et une résolution du faisceau lumineux; et
contrôler un actionneur pour contrôler le réflecteur en fonction de la plage de balayage et de la résolution.
